# EUROPÄISCHE PATENTANMELDUNG

(11) **EP 1 736 408 A1**
(43) Veröffentlichungstag der Anmeldung: **27.12.2006**
(21) Anmeldenummer: 06012712.3
(22) Anmeldetag: 21.06.2006
(51) Int. Cl.: B64F 1/26

(54) **Lärmschutzanlage zum Testen von Flugzeug-Triebwerken**

(30) Priorität: 25.06.2005 DE 102005029533
(71) Anmelder: APS Germany GmbH, 82178 Puchheim (DE)
(72) Erfinder: Schafhaupt, Horst, Dipl.-Ing., 82281 Egenhofen (DE)
(74) Vertreter: Rau, Manfred

(57) **Zusammenfassung**

Bei einer Lärmschutzanlage (1) zum Testen von an einem Flugzeug (2) montierten Flugzeug-Triebwerken (3) ist zur Erhöhung der Verfügbarkeit bei gleichzeitig geringen Herstellungs- und Betriebskosten vorgesehen, dass innerhalb einer Lärmschutzwand (6) ein Abgasstrahl-Umlenkzaun (17) angeordnet ist, der um eine ortsfeste Tragplatte (4) entlang einer Führung (18) verfahrbar ist. Die erfindungsgemäße Lärmschutzanlage (1) ermöglicht eine Ausrichtung von Flugzeugen (2) in zwei ausgeprägte Windrichtungen (24, 25).

## Beschreibung

Die Erfindung betrifft eine Lärmschutzanlage zum Testen von an einem Flugzeug montierten Flugzeug-Triebwerken.

Lärmschutzanlagen zum Testen von Flugzeug-Triebwerken, die nach Reparatur- oder Wartungsarbeiten einem Testlauf unter Volllast-Bedingungen unterzogen werden, sind bekannt. In der EP 0 322 433 A1 (entsprechend US-Patent 4 958 700) ist eine derartige Lärmschutzanlage mit einer annähernd hufeisenförmigen Lärmschutzwand offenbart. Zur Verhinderung einer Abstrahlung von Ansauggeräuschen der Triebwerke in Richtung des Bugs eines Flugzeuges sind an der Lärmschutzwand zwei schwenkbare Torflügel vorgesehen. Nachteilig bei einer derartigen Lärmschutzanlage ist, dass diese nur eingeschränkt verfügbar ist. Dies ist dadurch bedingt, dass zum Testen der Flugzeug-Triebwerke unter Volllast-Bedingungen eine optimale Anströmung der Triebwerke erforderlich ist. Bekannte Lärmschutzanlagen werden deswegen baulich derart ausgerichtet, dass der Bug eines Flugzeuges der vor Ort herrschenden Hauptwindrichtung entgegen gerichtet ist. Durch eine derartige bauliche Ausrichtung der Lärmschutzanlage wird statistisch über einen Jahreszyklus eine Verfügbarkeit von ungefähr 75% erzielt.

Der Erfindung liegt die Aufgabe zugrunde, eine Lärmschutzanlage der gattungsgemäßen Art zu schaffen, bei der die Verfügbarkeit deutlich erhöht wird und gleichzeitig die Kosten für die Herstellung und den Betrieb niedrig sind.

Diese Aufgabe wird erfindungsgemäß durch die Merkmale des Anspruches 1 gelöst. Der Kern der Erfindung liegt darin, einen Abgasstrahl-Umlenkzaun vorzusehen, der um eine ortsfeste Tragplatte für das zum Testen in die Lärmschutzanlage eingestellte Flugzeug entlang einer Führung verfahrbar ist. Der Erfindung liegt die Erkenntnis zugrunde, dass es an für den Bau von Lärmschutzanlagen der gattungsgemäßen Art vorgesehenen Orten häufig zwei ausgeprägte Windrichtungen gibt, die diametral zueinander sind. Das Flugzeug wird zum Testen der Flugzeug-Triebwerke in Abhängigkeit der gerade vorherrschenden Windrichtung in die Lärmschutzanlage eingestellt und der Abgasstrahl-Umlenkzaun entlang der Führung derart verfahren, dass dieser hinter dem Heck des Flugzeugs positioniert ist. Die Verfügbarkeit der erfindungsgemäßen Lärmschutzanlage liegt bei den genannten Bedingungen bei ungefähr 90%. Dadurch, dass die für schwere Lasten ausgelegte Tragplatte ortsfest und der Abgasstrahl-Umlenkzaun einfach um die Tragplatte verfahrbar ist, sind gleichzeitig die Herstellungs- und Betriebskosten der Lärmschutzanlage niedrig.

Eine Weiterbildung nach Anspruch 2 optimiert die Führung des Abgasstrahl-Umlenkzauns um das eingestellte Flugzeug.

Eine Ausgestaltung nach Anspruch 3 erhöht die Flexibilität beim Verfahren des Abgasstrahl-Umlenkzauns.

Eine Lärmschutzwand nach Anspruch 4 optimiert den Platzbedarf der Lärmschutzanlage. Flugzeuge weisen regelmäßig eine Länge und eine Spannweite mit ungefähr gleichen Abmessungen auf.

Ein Wandabschnitt nach Anspruch 5 reduziert die Herstellungs- und Betriebskosten der Lärmschutzanlage.

Ein Wandabschnitt nach Anspruch 6 stellt eine maximale Öffnung zum Einfahren des Flugzeuges bereit.

Eine Ausgestaltung nach den Ansprüchen 7 und 8 vereinfacht das Öffnen und Schließen der Lärmschutzanlage.

Eine Weiterbildung nach Anspruch 9 ermöglicht ein optimales Öffnen und Schließen der Lärmschutzanlage zum Ein- und Ausfahren des Flugzeugs.

Eine Führung nach Anspruch 10 ist einfach und kostengünstig.

Weitere Merkmale, Vorteile und Einzelheiten der Erfindung ergeben sich aus der nachfolgenden Beschreibung eines Ausführungsbeispieles anhand der Zeichnung. Es zeigt:
- Fig. 1: eine Draufsicht auf eine Lärmschutzanlage ohne ein eingestelltes Flugzeug,
- Fig. 2: eine Draufsicht auf die Lärmschutzanlage mit einem entgegen einer ersten Windrichtung eingestellten Flugzeug,
- Fig. 3: einen Querschnitt durch die Lärmschutzanlage entlang der Schnittlinie III-III in Fig. 2, und
- Fig. 4: eine Draufsicht auf die Lärmschutzanlage mit einem entgegen einer zweiten Windrichtung eingestellten Flugzeug.

Eine Lärmschutzanlage 1 zum Testen von an einem Flugzeug 2 montierten Flugzeug-Triebwerken 3 ist im Wesentlichen kreisförmig ausgebildet. Die Lärmschutzanlage 1 weist eine als Betonplatte ausgebildete horizontale Tragplatte 4 für das Flugzeug 2 auf, die mit einer bodenseitigen Tragstruktur 5 in Form eines im Untergrund angeordneten Fundaments verbunden ist. Die Tragplatte 4 ist relativ zu der Tragstruktur 5 ortsfest und undrehbar.

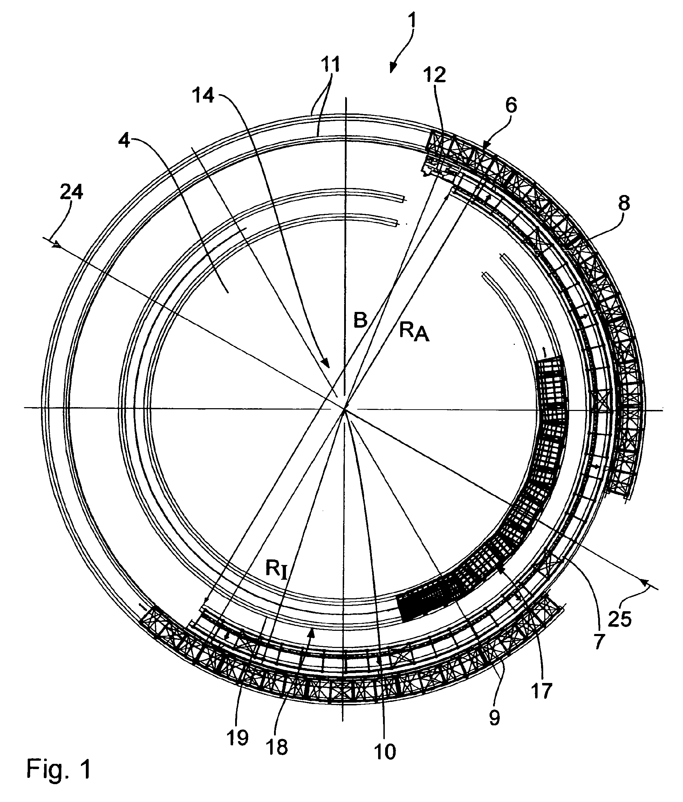

Die Lärmschutzanlage 1 weist weiterhin eine Lärmschutzwand 6 auf, die die Tragplatte 4 und das darauf abgestellte Flugzeug 2 umschließt. Die Lärmschutzwand 6 weist drei teilkreisförmige Wandabschnitte 7, 8, 9 auf, wobei ein erster innerer Wandabschnitt 7 sich entlang eines Halbkreises erstreckt und ein zweiter äußerer Wandabschnitt 8 sowie ein dritter äußerer Wandabschnitt 9 sich jeweils entlang eines Viertelkreises erstrecken. Die Wandabschnitte 7, 8, 9 sind konzentrisch zu einer senkrecht zu der Tragplatte 4 verlaufenden Mittel-Achse 10 angeordnet, wobei die als Tore ausgebildeten äußeren Wandabschnitte 8, 9 einen inneren Abstand R_{I} zu der Mittel-Achse 10 aufweisen, der geringfügig größer als ein äußerer Abstand R_{A} des ersten inneren Wandabschnitts 7 ist. Die als Tore dienenden Wandabschnitte 8, 9 sind zum Öffnen und Schließen der Lärmschutzanlage 1 entlang von teilkreisförmigen Tor-Schienen 11 mittels eines Tor-Antriebs 12 jeweils um einen Winkel von etwa 90° um den Wandabschnitt 7 verfahrbar. Zum Verfahren der Wandabschnitte 8, 9 sind in den Tor-Schienen 11 geführte Tor-Räder 13 vorgesehen. Fig. 1 zeigt die Wandabschnitte 8, 9 in geöffnetem Zustand, wobei diese eine Öffnung 14 zum Ein- und Ausfahren des Flugzeuges 2 mit einer Breite B von ungefähr 2R_{A} freigeben. Der erste Wandabschnitt 7 ist ortsfest.

Der Wandabschnitt 7 und die als Tore ausgebildeten Wandabschnitte 8, 9 sind gleichartig aufgebaut und weisen jeweils eine Tragkonstruktion 15 und daran befestigte Schalldämm-Elemente 16 auf. Derartige Schalldämm-Elemente 16 sind bekannt und beispielsweise in der DE 198 33 097 A1 beschrieben.

Innerhalb der Lärmschutzwand 6 ist ein Abgasstrahl-Umlenkzaun 17 angeordnet, der um die Tragplatte 4 entlang einer Führung 18 verfahrbar ist. Die Führung 18 ist konzentrisch zu der Mittel-Achse 10 angeordnet und in Form von Umlenkzaun-Schienen 19 ausgebildet. Der Abgasstrahl-Umlenkzaun 17 erstreckt sich entlang eines Viertelkreises und ist entlang der sich über einen Winkel von 330° erstreckenden Führung 18 um ungefähr 240° verfahrbar. Der Abgasstrahl-Umlenkzaun 17 ist mit Umlenkzaun-Rädem 20 in den Umlenkzaun-Schienen 19 angeordnet, wobei die Umlenkzaun-Räder 20 durch einen nur angedeuteten Umlenkzaun-Antrieb 21 drehantreibbar sind. Der Abgasstrahl-Umlenkzaun 17 weist zum Umlenken von Abgasstrahlen 22 der Flugzeug-Triebwerke 3 Leit-Elemente 23 auf, die allgemein bekannt und vielfach im Einsatz sind.

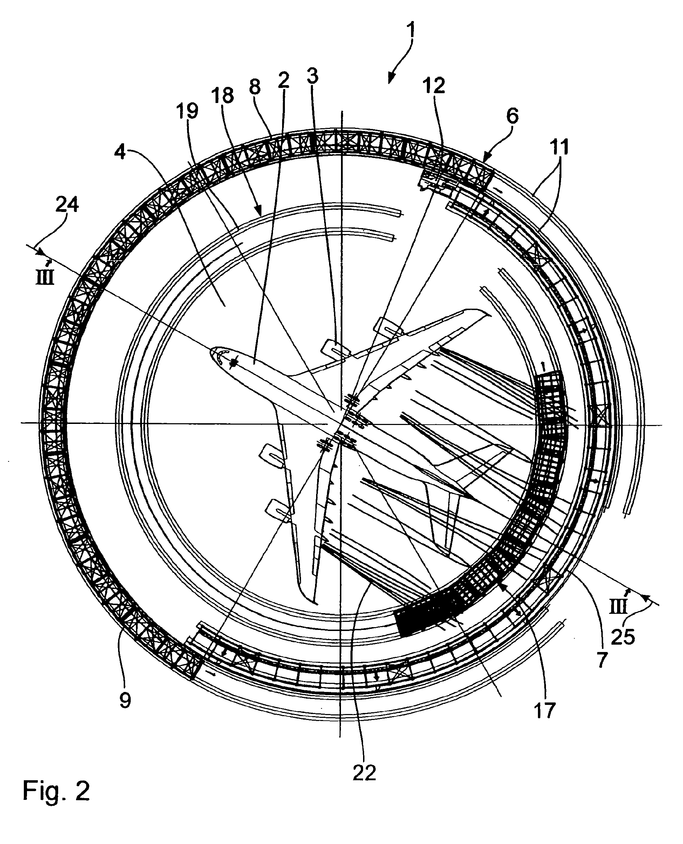

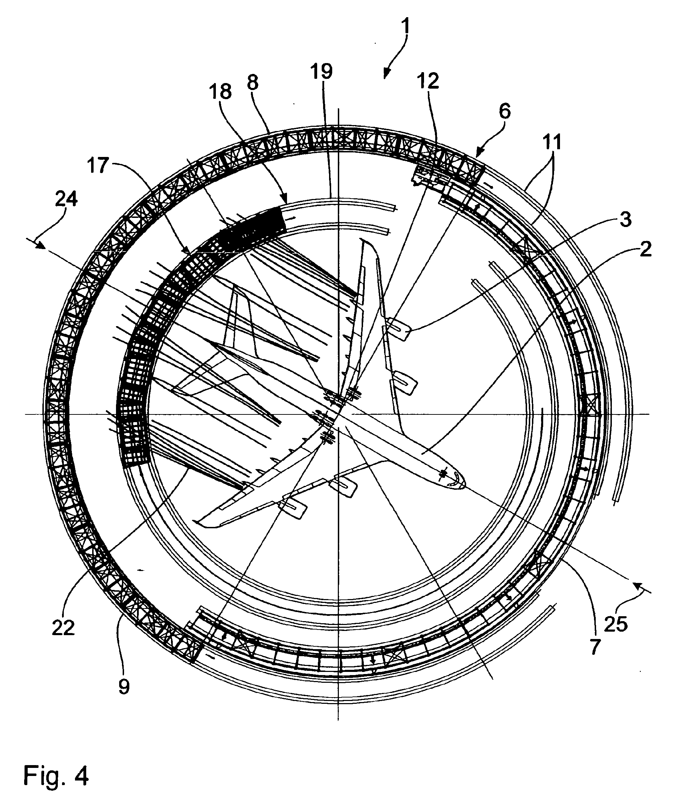

Die Lärmschutzanlage 1 ist baulich derart ausgerichtet, dass eine durch die Mittel-Achse 10 verlaufende Symmetrieebene E parallel zu einer ersten Windrichtung 24 und einer zweiten Windrichtung 25 verläuft, wobei zumindest die Lärmschutzwand 6 symmetrisch zu der Symmetrieebene E angeordnet ist. Die Windrichtungen 24, 25 sind die am Ort der Lärmschutzanlage 1 gegebenen Hauptwindrichtungen, wobei diese diametral zueinander gerichtet sind. Die Führung 18 des Abgasstrahl-Umlenkzauns 17 ist derart zu der Lärmschutzwand 6 angeordnet, dass der Abgasstrahl-Umlenkzaun 17 in der ersten Windrichtung 24 und der zweiten Windrichtung 25 zwischen der Lärmschutzwand 6 und einem auf der Tragplatte 4 abgestellten Flugzeug 2 positionierbar ist, wie Fig. 2 und 4 entnehmbar ist.

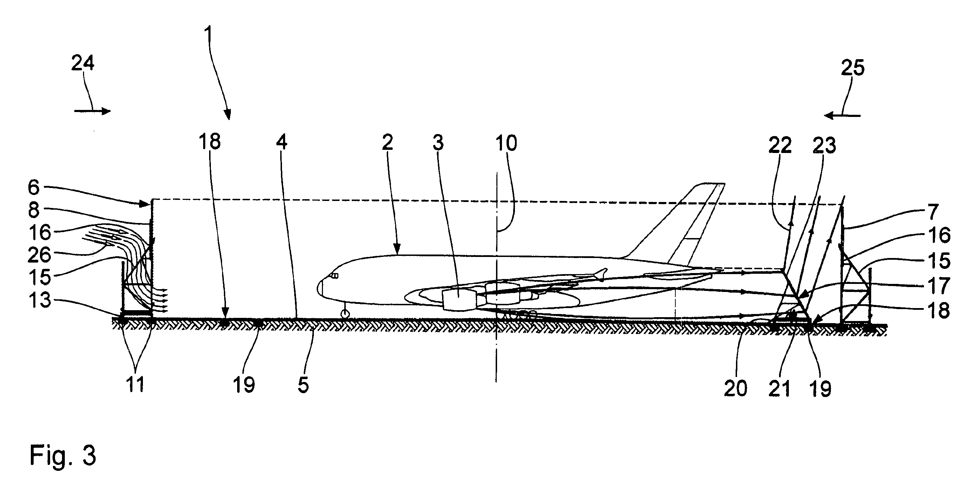

Im Folgenden wird die Funktionsweise der Lärmschutzanlage 1 beschrieben. Fig. 1 zeigt die Lärmschutzanlage 1 mit geöffneten Wandabschnitten 8, 9. Die Öffnung 14 zum Einfahren und Ausfahren des Flugzeuges 2 weist ihre maximale Breite B auf. Zunächst sei angenommen, dass der Wind die erste Windrichtung 24 aufweist. Zum Einfahren des Flugzeuges 2 ist der Abgasstrahl-Umlenkzaun 17 im Bereich des ersten Wandabschnittes 7 und der geöffneten Wandabschnitte 8, 9 positioniert, sodass die Öffnung 14 zum Einfahren des Flugzeuges 2 frei ist. Um das Flugzeug 2 entgegen der ersten Windrichtung 24 zu positionieren, wird das Flugzeug 2 derart rückwärts in die Lärmschutzanlage 1 eingefahren, dass die Flugzeug-Triebwerke 3 parallel zu der ersten Windrichtung 24 ausgerichtet sind und somit direkt von vorne angeströmt werden. Nach dem Einfahren des Flugzeuges 2 werden die Wandabschnitte 8, 9 geschlossen. Dieser Zustand ist in Fig. 2 gezeigt. Der Abgasstrahl-Umlenkzaun 17 ist im Falle der ersten Windrichtung 24 bereits zwischen dem Heck des Flugzeuges 2 und der Lärmschutzwand 6 positioniert, sodass lediglich ein Ausrichten des Abgasstrahl-Umlenkzauns 17 mittig zu dem Heck des Flugzeuges 2 erfolgen muss. Das Flugzeug 2 wird anschließend blockiert und die Flugzeug-Triebwerke 3 gestartet. Entsprechend Fig. 3 saugen die Triebwerke 3 Luft zwischen den Schalldämm-Elementen 16 der Lärmschutzwand 6 an, wobei die Luft gemäß den in Fig. 3 dargestellten Pfeilen 26 die Lärmschutzwand 6 durchströmt und im Wesentlichen waagerecht zu den Triebwerken 3 gelangt. Die aus den Triebwerken 3 austretenden Abgasstrahlen 22 werden mittels des Abgasstrahl-Umlenkzauns 17 umgeleitet und strömen in die Atmosphäre ohne dabei auf die Lärmschutzwand 6 zu treffen. Ist das Testen der Triebwerke 3 abgeschlossen, werden die Wandabschnitte 8, 9 geöffnet und das Flugzeug 2 aus der Lärmschutzanlage 1 ausgefahren.

Nachfolgend sei angenommen, dass der Wind die zweite Windrichtung 25 aufweist. Ausgehend von Fig. 1 wird das Flugzeug 2 nun derart vorwärts in die Lärmschutzanlage 1 eingefahren, dass die Triebwerke 3 parallel zu der zweiten Windrichtung 25 ausgerichtet sind und von vorne angeströmt werden. Nach dem Einfahren des Flugzeugs 2 werden die Wandabschnitte 8, 9 geschlossen. Der Abgasstrahl-Umlenkzaun 17 ist zunächst zwischen dem Bug des Flugzeuges 2 und der Lärmschutzwand 6 positioniert. Der Abgasstrahl-Umlenkzaun 17 wird entlang der Führung 18 mittels des Umlenkzaun-Antriebs 21 verfahren, wobei die Umlenkzaun-Räder 20 in den Umlenkzaun-Schienen 19 geführt werden. Beim Verfahren passiert der Abgasstrahl-Umlenkzaun 17 teilweise den Bug, eine vordere Tragfläche und teilweise die hinteren Tragflächen und das Heck des Flugzeuges 2. Der Abgasstrahl-Umlenkzaun 17 wird mittig zu dem Heck des Flugzeuges 2 positioniert. Der Abgasstrahl-Umlenkzaun 17 ist nun zwischen dem Heck des Flugzeuges 2 und der Lärmschutzwand 6 angeordnet. Das Testen der Triebwerke 3 kann nun in bereits beschriebener Weise erfolgen. Ist das Testen der Triebwerke 3 abgeschlossen, so wird der Abgasstrahl-Umlenkzaun 17 zunächst wieder um das Flugzeug 2 herum zum Bug des Flugzeuges 2 gefahren. Nach dem Öffnen der Wandabschnitte 8, 9 kann das Flugzeug 2 somit ausgefahren werden.

## Patentansprüche

1. Lärmschutzanlage zum Testen von an einem Flugzeug (2) montierten Flugzeug-Triebwerken (3) mit
a. einer horizontalen ortsfesten undrehbaren Tragplatte (4) für das Flugzeug (2),
b. einer die Tragplatte (4) umschließenden Lärmschutzwand (6), und
c. einem innerhalb der Lärmschutzwand (6) angeordneten Abgasstrahl-Umlenkzaun (17), der um die Tragplatte (4) entlang einer Führung (18) verfahrbar ist.

2. Lärmschutzanlage nach Anspruch 1, **dadurch gekennzeichnet, dass** der Abgasstrahl-Umlenkzaun (17) konzentrisch um eine senkrecht zu der Tragplatte (4) verlaufende Mittel-Achse (10) verfahrbar ist.

3. Lärmschutzanlage nach Anspruch 1 oder 2, **dadurch gekennzeichnet, dass**
der Abgasstrahl-Umlenkzaun (17) um einen Winkel von mindestens 180°, insbesondere um einen Winkel von mindestens 240°, verfahrbar ist.

4. Lärmschutzanlage nach einem der Ansprüche 1 bis 3, **dadurch gekennzeichnet, dass**
die Lärmschutzwand (6) mehrere teilkreisförmige Wandabschnitte (7, 8, 9) aufweist.

5. Lärmschutzanlage nach Anspruch 4, **dadurch gekennzeichnet, dass** mindestens ein Wandabschnitt (7) relativ zu der Tragplatte (4) ortsfest ist.

6. Lärmschutzanlage nach Anspruch 5, **dadurch gekennzeichnet, dass** der mindestens eine Wandabschnitt (7) sich etwa entlang eines Halbkreises erstreckt.

7. Lärmschutzanlage nach Anspruch 4, **dadurch gekennzeichnet, dass** mindestens ein Wandabschnitt (8, 9) und bevorzugt zwei Wandabschnitte (8, 9) relativ zu der Tragplatte (4) um die Mittel-Achse (10) verfahrbar sind.

8. Lärmschutzanlage nach Anspruch 7, **dadurch gekennzeichnet, dass** der mindestens eine Wandabschnitt (8, 9) und bevorzugt die zwei Wandabschnitte (8, 9) um einen Winkel von insgesamt etwa 180° verfahrbar sind.

9. Lärmschutzanlage nach Anspruch 7 oder 8, **dadurch gekennzeichnet, dass**
die zwei verfahrbaren Wandabschnitte (8, 9) sich jeweils etwa entlang eines Viertelkreises erstrecken.

10. Lärmschutzanlage nach einem der Ansprüche 1 bis 9, **dadurch gekennzeichnet, dass**
die Führung (18) als mindestens eine Schiene (19) ausgebildet ist.
